# EUROPEAN PATENT APPLICATION

(11) **EP 3 255 593 A1**
(43) Date of publication of application: **13.12.2017**
(21) Application number: 16173605.3
(22) Date of filing: 08.06.2016
(51) Int. Cl.: G06Q 10/04, G06Q 10/06

(54) **PERFORMANCE ANALYSING AND FORECASTING SYSTEM**

(71) Applicant: Essentia Analytics Ltd., London W2 2UA (GB)
(72) Inventor: SALVARIS, Mathew, London, W2 4UA (GB); WALLACE, Greg, London, W2 4UA (GB)
(74) Representative: Gill Jennings & Every LLP

(57) **Abstract**

A performance analysing and forecasting system for analysing data associated with an activity and providing an output indicating likely level of success of performance of that activity by a user. The system comprises a modelling and inference engine. The engine is arranged to receive reference data relating to standard actions within the activity and known outcomes associated with those actions; prior performance data associated with the activity and the user to which the forecast is to be provided, that data relating to past performance of the activity on a temporal basis; and biometric data associated with the user, that biometric data also being recorded on a temporal basis. The engine is arranged such that the received data is modelled to associate the biometric data with past performance of the user and standard reference data to provide an indication of a future likely outcome of the user when performing the activity. Output means provides an output to a user of the indication generated by the engine.

## Description

The present invention relates to a performance analysing and forecasting system.

A large number of systems are known which monitor biometric data of a user, such systems ranging from complex medical systems for health care to simple wearable devices for an individual's benefit in monitoring their own health or activity. Such systems monitor biometric information such as heart rate, activity levels, blood pressure etc. Such systems have significant benefits, with more complex systems aiding significantly in the diagnosis of medical conditions, and simpler consumer-based systems encouraging increased activity and assisting users in achieving training goals.

However, while such systems have many such benefits, they are not generally directed towards aiding a user to guide them in what their future performance might be and therefore assist them in making decisions as to an activity they might participate in the and their likelihood of success at that activity. For example, there are many activities, for example the operation of complex machinery such as an aircraft, or military equipment, the operation of surgical equipment, or involvement in other complex tasks such as financial trading where there would be significant benefit in having an indication prior to such activity as to how the results of that activity might be affected by earlier actions. Actions that may affect success are those such as a failure to sleep properly, an increased blood pressure through stress, or other factors.

Accordingly, there is a need for a system which can provide such indicators so that appropriate action can be taken to ensure continued safe and effective operation of the activity in question so that no safety critical errors or economically damaging action is taken by an individual. The system of the present invention seeks to meet this need. Furthermore, it seeks to meet this need using simple modelling techniques which require relatively low levels of data processing and mathematical analysis so that the system can be realised on standard processors and in a way which ensures that output predictions can be provided to a user sufficiently in advance of the actions to be taken to allow a user to take the necessary compensatory action.

According to the present invention there is provided (claim 1).

With the present invention, data in respect of a user, including biometric data such as sleep and activity levels, heart rate, blood pressure, etc. can be used in conjunction with data relating to the activity in question, either as performed by the individual whose data is being modelled, or a larger data set of other people engaging in the same activity, in a simple and effective manner to ensure that a prediction of the outcome of the activity in question can be provided to the user in a timely fashion and in a manner which suits a user. The information can be delivered via a smartphone or other portable device, or via email or other reporting system. The core concept of the system in terms of its modelling can be employed to model and predict success rates in a variety of different activities. Examples include operation of complex machinery, such as aircraft and military vehicles, performance in safety critical operations such as air traffic control and medical surgery, as well as the ability to provide predictions in respect of commercial activity such as financial trading.

The biometric data employed for the modelling can be provided through one of a number of ways. These can include information from wearable devices that monitor heart rate, blood pressure, and activity levels, including sleep patterns, or can include data provided by a user in the form of responses to questionnaires and inputs relating to diet, etc., or a combination of all of these.

The system of the present invention can be realised in a portable device, or can be realised in a centralised processor with data being provided to it remotely and the output from the system being provided onto a user through a remote communication such as by mobile telephone, or other communication systems such as the internet.

One example of the present invention will now be described with reference to the accompanying drawings, in which:
Figure 1 is a schematic block diagram showing some of the core components of a system according to the present invention; and
Figure 2 are flow diagrams showing some of the processes involved in the operation of the modelling engine in a system in accordance with the invention.

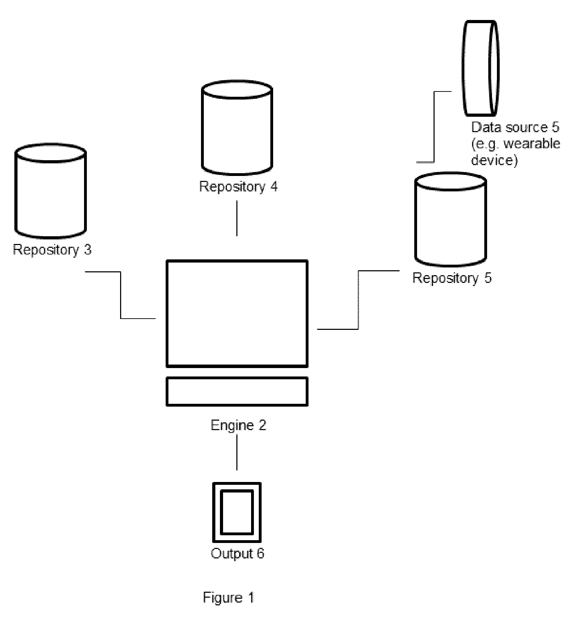

Referring to Figure 1, a system 1 according to the invention is shown. The system 1 has a modelling and inference engine 2, the operation of which will be described in more detail below, but which in general terms receives data, models future outcomes based on that data and can forecast the likely outcomes associated with that activity.

This engine 2 receives information from three sources. The first is a repository 3 which stores performance data relating to the activity against which the performance of the user is to be assessed and forecast. This data may relate, for example, to average success rates in surgery for a particular surgical procedure, optimum handling of aircraft routings for an air traffic controller, or financial market data for a financial trader. This data can include data related to the outcome of a number of alternative decisions that can be made in certain circumstances if required. For example, for the operator of an aircraft data may be stored and provided in respect of choices relating to speed, altitude etc. and how they affect overall safety and operation across a number of variables, and for a financial trader the information can relate to options across a number of possible sales and purchases and across a number of different asset classes and the outcomes in financial terms of those alternatives. The system may have processing associated with this repository 3 so that the raw data it receives can be processed and formatted to enable optimisation of data input to the engine 2.

Yet further data is supplied to the engine 2 through data repository 4. That data is related to decisions and operations performed by the user in the past. Those decisions may have been made in training exercises, in real life situations, or indeed a combination of both. This historical decision data has time related information associated with it so that the time of making the decisions can be recorded and compared if necessary with the timings of data from other sources, such as that in the data repository 3 or the biometric data repository 5 described below if appropriate. Again, the system may have processing associated with the repository 4 so that the raw data it receives can be processed and formatted to enable optimisation of data input to the engine 2.

The third source of data is provided by biometric data repository 5 which is a source of biometric data for the user. The nature of the data can vary dependent upon the activity for which performance is being modelled and forecast by the engine 2. However, examples include resting heart rate, sleep quantity, sleep efficiency, movement such as number of steps taken, and time spent in predetermined heart rate zones. There may also be data associated with diet, and physical characteristics of a user such as weight, height and blood pressure etc. This information may be collected automatically via a wearable device 5 or other monitoring system, or may be collected through input from a user, or indeed a combination of both.

The data source 5 may be arranged to collect the data in real time with constant access to a wearable device on the user, or may be arranged to collect the information periodically, either directly from a wearable device or the user, or indirectly from some remote collection system which collects data from the individual.

Yet again, the system may have processing associated with this repository 5 so that the raw data it receives can be processed and formatted to enable optimisation of data input to the engine 2.

The modelling engine is also connected to an output 6 which receives modelling and forecast information from the modelling engine 2 and outputs it to a user.

As will be appreciated, each of the components 2 through 6 may be connected directly to one another in a single integrated system with additional communication means for communicating with external data sources for updates and outputs as required. However, one or more of these components may be positioned remotely from the other with connection which is either through a local area network that may be wireless system or more remotely over the internet, mobile telephone systems etc. With the data sources 3 to 5 the data may be stored in a centralised location and accessed through a cloud-based system with appropriate security protocols to ensure the security of any personalised private data. The output 6 may be in the form of information provided to a wearable device, which may be the same wearable device that provides biometric data to the data source 5. Alternatively, it may take the form of a mobile device such as a smartphone, or could take the form of an automated email or report generator that transmits information on a regular or intermittent basis to the user.

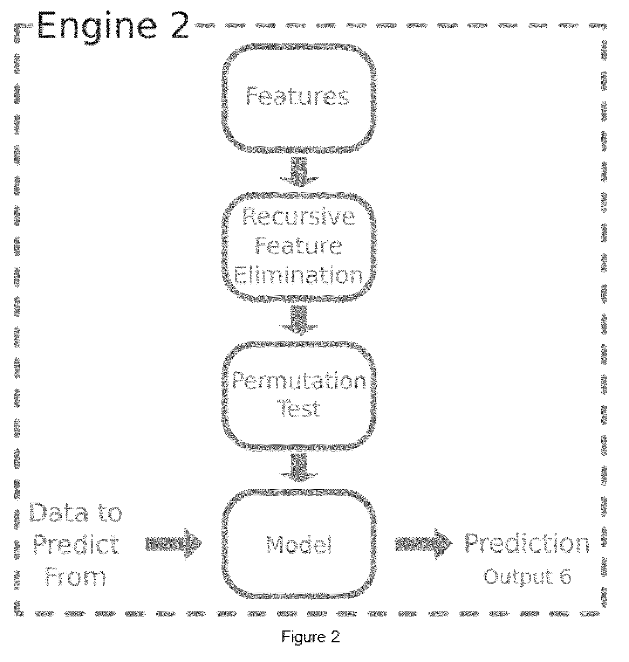

Referring now to Figure 2 the operation of the modelling engine 2 will now be described in more detail. The engine will be performed in most circumstances by an appropriately configured computer processing system of a generally standard nature, and one of the advantages of the invention is that it can be employed with relatively low amounts of processing power that can be performed quite readily on a PC or appropriately configured mobile processing device, such as a tablet or smartphone. It will also be appreciated that the techniques used in the engine enable it to provide forecasts which are accurate and reliable, yet which are also provided in a timely fashion such that a user can adapt the activity being performed to compensate for his or her actions during performance of the activity if necessary. So, for example, if a pilot is flying a complex aircraft, and the forecast engine, using data related to standard operations from data repository 3, pilot historical and temporal data from data repository 4, and biometric information from repository 5, determines that due to a combination of factors based on all this information there is a likelihood of more errors occurring in operation during flight, then a pilot can ask to be relieved, or engage additional safety systems, etc.

As can be seen from Figure 2, the modelling engine 2 can employ a number of techniques either serially or in parallel to use data from all three of the repositories to model current activity against prior activity and provide forecast space thereon.

For example, the system can take recent biometric information over a certain period (for example three days) see how that data compares to prior activity by the user and compare it to their outcomes and the outcomes of standard reference activity data to flag where a potential error is likely to occur with such a combination. To improve the statistical accuracy of the system the invention uses a number of techniques.

In terms of the various types of data provided to the model engine 2, what the inventors of the present invention have appreciated is that, whilst it may be beneficial to provide a wide range of data of varying types there are many actions that can be modelled for which much of that data is unnecessary. This means that employing all the data in the modelling of a particular action can be time consuming and requires a large amount of processing that requires significant processing power that may be beyond the ability of the types of device that are desirable to employ as the modelling engine 2 and indeed may not actually improve the accuracy of the forcast that is produced.

In view of this the modelling engine 2 is configured to employ a recursive feature elimination step. In this step the engine starts with a full set of data features and then iteratively removes features until a predetermined stopping criterion is reached. That criterion may be for example a minimum number of data features, an acceptable amount of processing for the system being employed, a significant decrease in accuracy of the forecast when compared to a reference model, or a level of forecast accuracy which is considered to be of statistical significance.

During each iteration in which a data feature is removed the model which is constructed from the subset of data features can be compared using a number of methodologies to see whether it is valid. In the example shown in Figure 2 two particular methodologies are shown, one for when a larger amount of processing power is available, and the other when it is more limited.

One method is the employment of cross-validation. In this approach the data received by the modelling engine 2 is split into a number of folds (equivalent to groups of examples). Each fold is then modelled, with a single data set chosen as the test set, and the remainder chosen as training sets. After each fold has been analysed the accuracy of the modelling for each of the test sets is averaged to provide an accuracy of the model. The process is then repeated and average accuracy for each model compared to determine whether a particular iteration of model is an improvement over the last until the predetermined criterion is reached. This approach is a highly reliable model evaluation technique, but in some circumstances can require a significant amount of processing and can be time consuming.

An alternative approach that can be employed by the invention, particularly where there is a desire to reduce processing requirements, is to employ an out-of-bag error technique. This approach uses known mathematical analysis in the form of a Random Forest model. Random Forest techniques and are well established in the field of machine learning and one of the key aspects of such techniques, using out-of-bag errors as an estimate of the generalisation error of a model, is relatively well known. Using such a Random Forest technique it is possible to estimate a particular model's error without employing full cross-validation techniques and has been shown to provide generally accurate estimations of a particular model's error at reduced computational cost.

Once the recursive elimination step has been performed and a model selected that is believed to be of appropriate accuracy it is preferable to provide a "sanity check" to determine whether or not the accuracy of the model is significantly better than chance. To perform this step the modelling engine 2 employs a permutation test. Example data for the determination is labelled to indicate the class to which the example belongs. For example, example data representing a good action performance on a prior occasion may be labelled with a "1" and that representing a poor performance with a "0". The determination then compares the model to be employed with a number of dummy models which are trained on the same input data labels for that data but which are shuffled randomly. The concept here being that the labels help the engine to draw out the correlations with data features, such as (resting heart rate, hours of sleep, etc.). Shuffling these labels randomly then destroys any such correlation to allow random (chance) reference models. The accuracy of the determined model and the dummy models can then be obtained either by using cross-validation in a similar approach to that determined above, or by the employment of out-of-bag error methods as also described above. The accuracy obtained by the dummy models form a distribution of accuracies that are representative of the accuracies that would be obtained by random guessing. This is because even though same number of features and the label distributions are retained, each of the dummy models obtains a random shuffle of the underlying data. The determined model can then be compared to this distribution and, so long as it exceeds a significance threshold that is either predetermined or adapted dependent upon the activity to be forecasted then the model can be considered to be a valid one and worthwhile employing.

Once the model is found to be significant it is deployed and the readings from the current time period are passed through it. From the model a prediction is obtained which is subsequently fed back to the user.

With the above approach to operation of a modelling engine it is possible to ensure a high degree of forecasting accuracy yet still produce a model engine with relatively low processing requirements and which can obtain the best results out of the data provided in a timely manner.

As can be seen from the above, what the system of the invention achieves is the ability to forecast the likelihood of successful and/or unsuccessful outcomes in complex activities in safety and economically critical environments so that an individual can adapt their activity accordingly to improve safety, efficiency and profitability levels.

## Claims

1. A performance analysing and forecasting system for analysing data associated with an activity and providing an output indicating likely level of success of performance of that activity by a user, the system comprising a modelling and inference engine, the engine arranged to receive:
reference data relating to standard actions within the activity and known outcomes associated with those actions;
prior performance data associated with the activity and the user to which the forecast is to be provided, that data relating to past performance of the activity on a temporal basis; and
biometric data associated with the user, that biometric data also being recorded on a temporal basis; the engine being arranged such that the received data is modelled to associate the biometric data with past performance of the user and standard reference data to provide an indication of a future likely outcome of the user when performing the activity; and
output means for providing an output to a user of the indication generated by the engine.

2. The system of claim 1 further comprising at least one of a reference data source, prior performance data source, and a biometric data source.

3. A system according to claim 1 or 2 further comprising means for obtaining biometric data from the user and providing it to the biometric data source.

4. A system according to any preceding claim further comprising processing means for processing the data from at least one of the data sources to optimise it prior to providing it to the modelling engine.

5. A system according to any preceding claim, wherein the activity is one of vehicle operation, weapon handling, industrial process control, surgery, or financial trading.

6. A system according to any preceding claim wherein the modelling and inference engine is arranged to perform an iterative model determination step in which it is determined which data from the received data sets is required to provide an accurate forecasting model, the engine further arranged to employ a model which uses only the determined effective data in its forecasting model.

7. A system according to claim 6, wherein the system is arranged such that the iterative model determination step comprises a model data elimination process performing at least one of cross-validation or out-of-bag error model validation techniques in each iteration to determine the relevance of the data and a model in that iteration.

8. A system according to claim 6 or claim 7 wherein the data that is selected, and its associated model, is compared to the accuracy of at least one model based on random chance alone to determine the forecasting accuracy of the selected data and model.

9. A system according to any preceding claim and provided by a computer processing system.
